# EUROPÄISCHE PATENTSCHRIFT

(11) **EP 2 499 384 B1**
(45) Veröffentlichungstag und Bekanntmachung des Hinweises auf die Patenterteilung: **27.08.2014**
(21) Anmeldenummer: 10779250.9
(22) Anmeldetag: 09.11.2010
(51) Int. Cl.: F16C 11/06, F16J 3/04

(54) **KUGELGELENK SOWIE VERFAHREN ZUM BEFESTIGEN EINES DICHTUNGSBALGS AN EINEM KUGELGELENK**
BALL-JOINT AS WELL AS METHOD FOR SECURING A SEALING BOOT ON A BALL-JOINT
JOINT À ROTULE ET PROCÉDÉ DE FIXATION D'UN SOUFFLET D'ÉTANCHÉITÉ SUR UN JOINT À ROTULE

(30) Priorität: 12.11.2009 DE 102009052923
(43) Veröffentlichungstag der Anmeldung: 19.09.2012
(73) Patentinhaber: TRW Automotive GmbH, 73553 Alfdorf (DE)
(72) Erfinder: PONUKARIN, Vladimir, 40595 Düsseldorf (DE); ERDOGAN, Cengiz, 47608 Geldern (DE)
(74) Vertreter: Prinz & Partner
(86) Internationale Anmeldenummer: PCT/EP2010/006818
(87) Internationale Veröffentlichungsnummer: WO 2011/057758

(56) Entgegenhaltungen:
- EP-A1- 0 047 343
- EP-A1- 1 442 831
- EP-A2- 0 269 836
- EP-A2- 0 319 679
- DE-A1- 4 240 061
- DE-U- 7 225 365

## Beschreibung

Die Erfindung betrifft ein Verfahren zum Befestigen eines Dichtungsbalgs an einem Kugelgelenk sowie ein Kugelgelenk mit einem Gelenkgehäuse, einem Kugelzapfen, der im Gelenkgehäuse schwenkbar aufgenommen ist, und einem Dichtungsbalg, der bezogen auf eine Gelenkachse ein am Kugelzapfen anliegendes erstes axiales Balgende und ein am Gelenkgehäuse befestigtes zweites axiales Balgende aufweist, wobei das Gelenkgehäuse zur Befestigung des Dichtungsbatgs einen Balgsitz aufweist, der sowohl einen radialen Anschlag als auch einen axialen Anschlag für das zweite axiale Balgende bilde, und wobei ein vom Gelenkgehäuse beabstandeter, geschlossener Haltering vorgesehen ist, der den Dichtungsbalg radial einwärts gegen den Balgsitz beaufschlagt.

Zum Schutz des Kugelgelenks vor Verschmutzung und gegebenenfalls zur Aufnahme von Schmiermittel ist bei Kugelgelenken im Übergangsbereich zwischen dem Kugelzapfen und dem Gelenkgehäuse üblicherweise ein Dichtungsbalg vorgesehen. Dieser Dichtungsbalg muss zum einen am Kugelzapfen und zum anderen am Gelenkgehäuse zuverlässig und dauerhaft befestigt werden. Die Balgbefestigung soll darüber hinaus fertigungstechnisch möglichst einfach realisierbar sein, um den Montageaufwand für das Kugelgelenk zu reduzieren.

In der Regel werden zur Befestigung des Dichtungsbalgs entweder geschlitzte Spannringe oder geschlossene Halteringe verwendet. Die elastisch aufweitbaren Spannringe werden dabei an einem Balgende aufgeklippst und beaufschlagen den Dichtungsbalg radial nach innen gegen einen Balgsitz. Die geschlossenen Halteringe werden hingegen plastisch verformt, um die Balgenden am Gelenkgehäuse bzw. am Kugelzapfen zu fixieren. Aufgrund ihrer geschlitzten Ausführung haben Spannringe den Nachteil, dass sie in Umfangsrichtung gesehen keine konstante, radial einwärts gerichtete Haltekraft aufbringen und darüber hinaus an ihren Schlitzkanten den Dichtungsbalg beschädigen können.

Die EP 0 269 836 A2 offenbart eine Vorrichtung zur Montage eines Dichtungsbalgs am Gelenkgehäuse eines Kugelgelenks. Zur Befestigung des Balgs wird ein geschlossener Blechring verwendet, der einen radial nach innen gewölbten Querschnitt aufweist. Der Blechring stützt sich bei der Balgmontage an einer umlaufenden Ringstufe des Gelenkgehäuses ab und wird plastisch verformt. Aufgrund seines gewölbten Querschnitts verringert sich bei der plastischen Verformung ein Innendurchmesser des Blechrings, sodass der Balgrand umlaufend gleichmäßig gegen einen Balgsitz gedrückt wird.

Auch die EP 0 319 679 A2 zeigt ein Kugelgelenk sowie ein Verfahren zur Befestigung eines Dichtungsbalgs an einem Gelenkgehäuse des Kugelgelenks. Hierbei kommt ein geschlossener Haltering zum Einsatz, der sich am Gelenkgehäuse abstützt, durch ein Werkzeug axial sowie radial nach innen beaufschlagt und dabei plastisch verformt wird. Nach der plastischen Verformung ist der Dichtungsbalg, genauer ein Randwulst des Dichtungsbalgs, durch den Haltering am Gelenkgehäuse fixiert.

Die beschriebenen Kugelgelenke weisen den Nachteil auf, dass der Haltering nach der Montage des Dichtungsbalgs am Gelenkgehäuse anliegt. Da der plastisch verformbare Haltering genau wie das Gelenkgehäuse üblicherweise aus Metall gefertigt wird, ist diese Kontaktstelle insbesondere bei auftretender Feuchtigkeit stark korrosionsgefährdet.

Aus der gattungsbildenden EP 0 047 343 A1 ist ein vergleichsweise aufwendiges Verfahren zur Montage eines Dichtungsbalgs an einem Kugelgelenkgehäuse bekannt, bei dem ein Haltering aus Kunststoff zum Einsatz kommt. Beim Spritzgießen des Halterings mit einem größeren Durchmesser als zur Festlegung des Dichtungsbalgs erforderlich werden durch Steuerung der Abkühlungsgeschwindigkeit eingefrorene Spannungen erzeugt. Diese werden bei der Montage des Kugelgelenks durch Erwärmung über die Glasübergangstemperatur derartig lebendig gemacht, dass sie den Haltering auf den gewünschten kleineren Durchmesser zusammenziehen, wodurch der Dichtungsbalg durch Radialverspannung am Gelenkgehäuse festgelegt wird.

Aufgabe der Erfindung ist es, ein Kugelgelenk zu schaffen, das eine zuverlässige, dauerhafte und einfach herstellbare Verbindung zwischen einem axialen Balgende und dem Gelenkgehäuse aufweist, wobei diese Verbindung insbesondere eine geringe Korrosionsanfälligkeit aufweisen soll.

Erfindungsgemäß wird diese Aufgabe gelöst durch ein Kugelgelenk der eingangs genannten Art, bei dem der Haltering ein plastisch umgeformter Blechring ist und der Balgsitz eine um den Kugelzapfen umlaufende Gehäusestufe ist, die eine den axialen Anschlag bildende Stirnfläche und eine den radialen Anschlag bildende Seitenfläche umfasst, wobei die Stirnfläche und die Seitenfläche einen Winkel α < 90° einschließen. Da der Haltering in diesem Fall nicht am Gelenkgehäuse anliegt, ist die Korrosionsgefahr gering und die zu erwartende Lebensdauer der Balgbefestigung entsprechend hoch.

In einer Ausführungsform verringert sich der Durchmesser des Halterings in axialer Richtung gesehen vom zweiten Balgende zum ersten Balgende hin. Durch diese konische Ringform ergibt sich zusammen mit dem radialen Anschlag und dem axialen Anschlag des Balgsitzes eine besonders widerstandsfähige und zuverlässige Befestigung des zweiten axialen Balgendes.

In dieser Ausführungsform ist der Haltering an seinem verjüngten Ende bevorzugt nach außen umgebogen. Der Dichtungsbalg erstreckt sich ausgehend von seinem zweiten axialen Balgende radial zwischen diesem verjüngten Ende des Halterings und dem radialen Anschlag des Gelenkgehäuses in Richtung zu seinem ersten axialen Balgende. Durch das nach außen umgebogene Ende des Halterings sind im Kontaktbereich mit dem Dichtungsbalg keine scharfkantigen Halteringenden vorhanden, die den Dichtungsbalg beschädigen könnten. Dies wirkt sich wiederum positiv auf die Lebensdauer des Dichtungsbalgs aus.

Die gestellte Aufgabe wird im Übrigen auch gelöst durch ein Verfahren zum Befestigen eines Dichtungsbalgs an einem Kugelgelenk, wobei das Kugelgelenk einen Dichtungsbalg, ein Gelenkgehäuse, einen im Gelenkgehäuse schwenkbar aufgenommenen Kugelzapfen mit einer Zapfen-Längsachse sowie einen Haltering zur Befestigung des Dichtungsbalgs umfasst, und wobei das Verfahren folgende Schritte aufweist:
a) Axiale Positionierung des Halterings und des Dichtungsbalgs bezüglich der Zapfen-Längsachse, so dass der Haltering den Dichtungsbalg und der Dichtungsbalg einen Balgsitz des Gelenkgehäuses umschließen;
b) Kraftgesteuerte Beaufschlagung des Halterings gegen einen axialen Anschlag und einen radialen Anschlag des Balgsitzes, wobei der Haltering verformt wird.

Dabei ist vorgesehen, dass im Schritt b) sich der Haltering im Wesentlichen am Dichtungsbalg abstützt und ein konusförmiges Werkzeug am Haltering angreift, den Haltering axial sowie radial nach innen beaufschlagt und plastisch so umformt, dass sich ein Durchmesser des Halterings zumindest abschnittsweise verringert.

Es wurde erkannt, dass bei geeigneter Geometrie und Anordnung des Halterings und des zweiten Balgendes sowie einer geeigneten Wahl des Balgmaterials der Dichtungsbalg als direktes Widerlager dienen kann, an dem sich der Haltering bei seiner plastischen Verformung im Wesentlichen abstützt.

In einer Verfahrensvariante bleibt der Haltering bei seiner plastischen Umformung im Schritt b) vom Gelenkgehäuse beabstandet und stützt sich über den Balg axial und radial nur indirekt am Gelenkgehäuse ab. Der Haltering ist also nie, insbesondere nicht nach der Balgmontage, in Kontakt mit dem Gelenkgehäuse, sodass kein Metall-Metall-Kontakt besteht und die Korrosionsgefahr auch in feuchter Umgebung minimal ist.

In einer alternativen Ausführungsvariante stützt sich der Haltering bei seiner plastischen Umformung im Schritt b) unter elastischer Kompression des Balgs sowohl am Balg als auch an einer Stirnfläche des Gelenkgehäuses ab, wobei sich der Balg nach dem Schritt b) wieder aufweitet und den Haltering axial von der Stirnfläche weg bewegt. Obwohl der Haltering hier im Laufe des Verfahrens kurzzeitig mit dem Gelenkgehäuse in Berührung kommt, wird durch die Elastizität des Balgmaterials sichergestellt, dass er nach der Balgmontage wieder vom Gelenkgehäuse beabstandet ist. Somit ergeben sich dieselben Vorteile wie bei der vorigen Verfahrensvariante, nämlich eine geringe Korrosionsgefährdung im Befestigungsbereich des zweiten Balgendes.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 einen Detailausschnitt eines erfindungsgemäßen Kugelgelenks mit montiertem Dichtungsbalg;
- Figur 2 ein erfindungsgemäßes Kugelgelenk vor der Montage des Dichtungsbalgs; und
- Figur 3 ein erfindungsgemäßes Kugelgelenk kurz nach der Montage des Dichtungsbalgs.

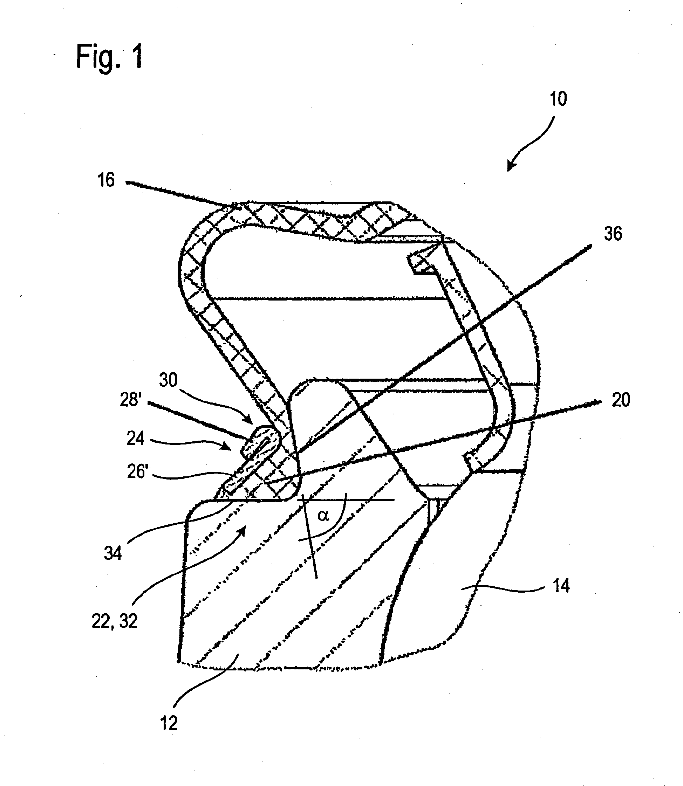

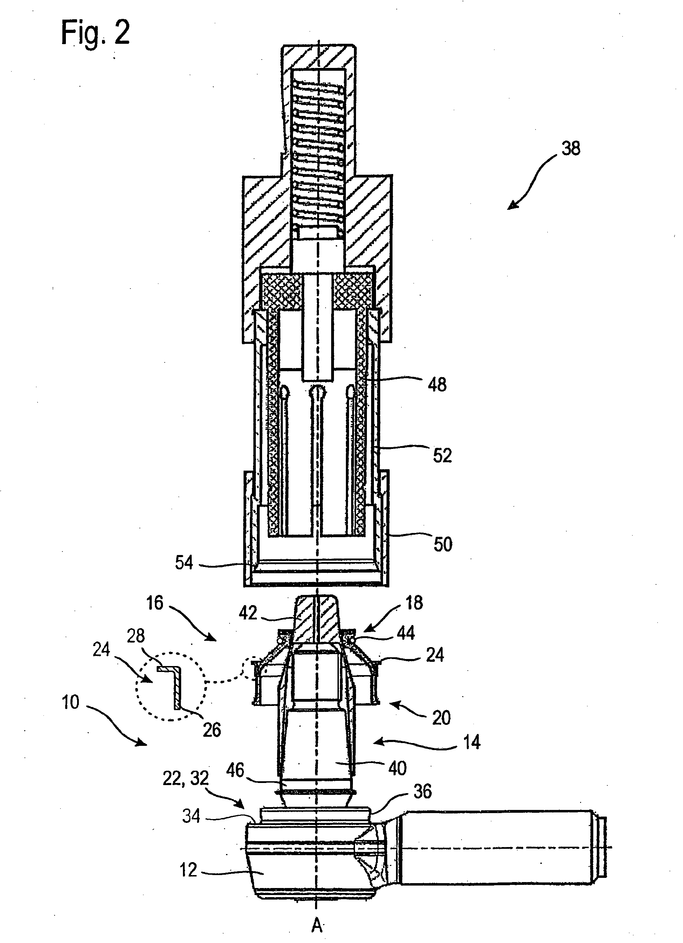

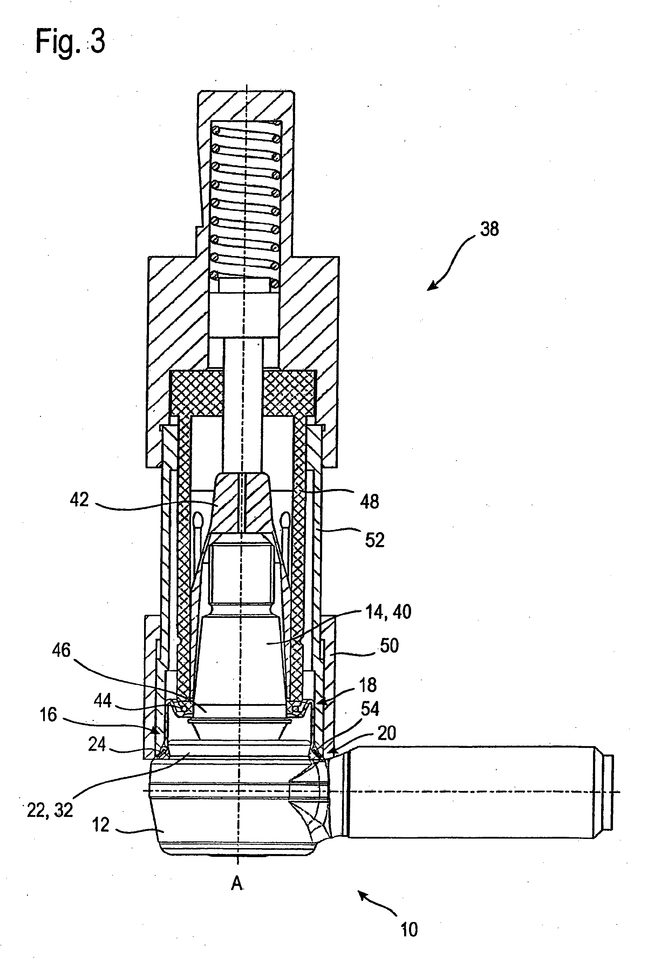

Die Figur 1 zeigt ein Kugelgelenk 10 mit einem Gelenkgehäuse 12, einem Kugelzapfen 14, dessen Kugelkopf im Gelenkgehäuse 12 schwenkbar aufgenommen ist, und einem bereits montierten Dichtungsbalg 16, der bezogen auf eine Zapfen-Längsachse A ein am Kugelzapfen 14 befestigtes erstes axiales Balgende 18 (siehe Figuren 2 und 3) und ein am Gelenkgehäuse 12 befestigtes zweites axiales Balgende 20 hat. Das Gelenkgehäuse 12 weist zur Befestigung des Dichtungsbalgs 16 einen Balgsitz 22 auf, welcher sowohl einen radialen Anschlag als auch einen axialen Anschlag für das zweite Balgende 20 bildet. Es ist ein vom Gelenkgehäuse 12 beabstandeter, geschlossener Haltering 24 vorgesehen, der den Dichtungsbalg 16 radial einwärts gegen den Balgsitz 22 beaufschlagt.

Der Haltering 24 ist dabei ein separater, plastisch umgeformter Metallring, vorzugsweise aus Stahlblech, der das zweite Balgende 20 im Wesentlichen umschließt.

Vor der Befestigung des Dichtungsbalgs 16 am Gelenkgehäuse 12 hat der Haltering 24 im vorliegenden Ausführungsbeispiel einen L-förmigen Ringquerschnitt mit einem im Wesentlichen kreiszylindrischen Schenkel 26, der sich in axialer Richtung erstreckt, und einem weiteren Schenkel 28, der sich im Wesentlichen radial erstreckt (vgl. Detail in Figur 2).

Nach der plastischen Umformung des Halterings 24 bei der Balgmontage verjüngt sich der Haltering 24 in axialer Richtung gesehen vom zweiten Balgende 20 zum ersten Balgende 18 hin konisch. Der Dichtungsbalg 16 erstreckt sich ausgehend von seinem zweiten axialen Balgende 20 zwischen einem verjüngten Ringende 30 des Halterings 24 und dem Gelenkgehäuse 12 in Richtung zu seinem ersten axialen Balgende 18. Um den anliegenden Dichtungsbalg 16 nicht durch scharfe Kanten zu beschädigen, ist der Haltering 24 an seinem verjüngten Ringende 30 um etwa 180° nach außen umgebogen und damit abgerundet.

Konkret wird bei der Umformung des Halterings 24 der ursprünglich zylindrische Schenkel 26 (Figur 2) zu einem konischen Schenkel 26' (Figur 1) verformt, wobei der Schenkel 26' im Übergangsbereich zum Schenkel 28 (bzw. 28') einen gegenüber dem ursprünglichen Durchmesser verringerten Durchmesser aufweist. Ferner wird der ursprünglich radiale Schenkel 28 zu einem Schenkel 28' verformt, der etwa parallel zum verformten Schenkel 26' verläuft und am Schenkel 26' anliegt.

Gemäß den Figuren 1 bis 3 ist der Balgsitz 22 am Gelenkgehäuse 12 eine um den Kugelzapfen 14 umlaufende Gehäusestufe 32. Diese Gehäusestufe 32 umfasst dabei eine den axialen Anschlag bildende Stirnfläche 34 und eine den radialen Anschlag bildende Seitenfläche 36. Zusammen mit dem umgeformten Haltering 24 ergibt sich dadurch ein im Querschnitt etwa dreieckförmiger, umlaufender Ringraum, der vorzugsweise vollständig vom Balgmaterial des zweiten Balgendes 20 ausgefüllt ist (Figur 1). Das zweite Balgende 20 ist dabei bevorzugt als verdickter Wulst ausgeführt, sodass sich eine feste und zuverlässige Befestigung des Halterings 24 am Gelenkgehäuse 12 ergibt.

Hervorzuheben ist, dass der Haltering 24 weder an der Stirnfläche 34 noch an der Seitenfläche 36 anliegt, sondern jeweils durch dazwischenliegendes Balgmaterial vom Gelenkgehäuse 12 beabstandet ist. Der metallene Haltering 24 ist somit vom ebenfalls metallenen Gelenkgehäuse 12 durch den üblicherweise aus einem elastischen Kunststoffmaterial hergestellten Dichtungsbalg 16 getrennt, so dass es keinen Metall-Metall-Kontakt gibt und dementsprechend selbst in feuchter oder nasser Umgebung nur eine geringe Korrosionsgefährdung gegeben ist.

Gemäß Figur 1 erstreckt sich die Stirnfläche 34 der Gehäusestufe 32 im Wesentlichen senkrecht zur Gelenkachse A und schließt mit der Seitenfläche 36 einen Winkel α<90° ein. Bei einem Winkel unter 90° erhöht sich der Widerstand gegen ein axiales Abziehen des Dichtungsbalgs 16 vom Gelenkgehäuse 12, da sich das zweite axiale Balgende 20 (und damit auch der Haltering 24) radial aufweiten müssten.

Im Folgenden wird anhand der Figuren 2 und 3 auf das Verfahren zum Befestigen des Dichtungsbalgs 16 am Kugelgelenk 10 eingegangen.

Die Figur 2 zeigt das Kugelgelenk 10 vor der Balgmontage, wobei die Gelenkachse A vertikal ausgerichtet ist. Des Weiteren ist ein Teil einer Montagemaschine 38 zu sehen, das in Richtung der Gelenkachse A bewegt werden kann.

Auf einen Schaft 40 des Kugelzapfens 14 ist ein Montagekonus 42 aufgesetzt, um die Montage des Dichtungsbalgs 16 zu erleichtern. Auf diesen Montagekonus 42 ist wiederum der Dichtungsbalg 16 aufgesteckt, wobei das zweite axiale Balgende 20 dem Gelenkgehäuse 12 zugewandt ist. Das erste axiale Balgende 18 weist im Vergleich zum zweiten axialen Balgende 20 einen geringeren Innendurchmesser auf, sodass zunächst das erste axiale Balgende 18 am Montagekonus 42 anliegt. Gemäß Figur 2 umfasst das Kugelgelenk 10 einen Befestigungsring 44, der am ersten axialen Balgende 18 vormontiert ist. Der Haltering 24 ist bereits ebenfalls am Dichtungsbalg 16 angeordnet, wobei er entweder gleich am zweiten Balgende 20 positioniert wird, oder wie in Figur 2 gezeigt, zunächst eine axiale Zwischenstellung einnimmt.

In einem ersten Verfahrensschritt werden nun der Haltering 24 und der Dichtungsbalg 16 mithilfe der Montagemaschine 38 axial so positioniert, dass der Haltering 24 den Dichtungsbalg 16 und der Dichtungsbalg 16 einen Balgsitz 22 des Gelenkgehäuses 12 umschließt. In einem zweiten, nachfolgenden Verfahrensschritt wird der Haltering 24 kraftgesteuert gegen einen axialen Anschlag und einen radialen Anschlag des Balgsitzes 22 beaufschlagt, wobei sich der Haltering 24 im Wesentlichen am Dichtungsbalg 16 abstützt und plastisch verformt wird.

Insbesondere wird bereits im ersten Verfahrensschritt das erste axiale Balgende 18 durch den Befestigungsring 44 an einem Balgsitz 46 des Kugelzapfens 14 fixiert. Der Befestigungsring 44 ist dabei ein geschlitzter Spannring und der Balgsitz 46 des Kugelzapfens 14 ein zylindrischer Abschnitt, gegen den das erste Balgende 18 durch den Befestigungsring 44 beaufschlagt wird. Alternativ kann der Balgsitz 46 auch eine Nut sein, wobei der Spannring im ersten Verfahrensschritt durch den Montagekonus 42 zunächst elastisch aufgeweitet wird und schließlich in die Nut schnappt.

Konkret greift im ersten Verfahrensschritt zunächst ein erstes Werkzeug 48 der Montagemaschine 38 am ersten axialen Balgende 18 an und positioniert den gesamten Dichtungsbalg 16 mitsamt dem Befestigungsring 44 und dem Haltering 24 in axialer Richtung, bis der Befestigungsring 44 seine Befestigungsposition am Balgsitz 46 des Kugelzapfens 14 erreicht hat. Danach greift ein weiteres, zweites Werkzeug 50 der Montagemaschine 38 am Haltering 24 an, um den Haltering 24 und das zweite axiale Balgende 20 axial zu positionieren.

Im zweiten Verfahrensschritt greift schließlich ein konusförmiges, drittes Werkzeug 52 der Montagemaschine 38 am Haltering 24 an, beaufschlagt den Haltering 24 sowohl axial als auch radial nach innen gegen das Gelenkgehäuse 12 und formt den Haltering 24 plastisch so um, dass sich ein Durchmesser des Halterings 24 zumindest abschnittsweise verringert. Dabei wird ein ursprünglich zylindrischer Abschnitt des Halterings 24 (Figur 2, Schenkel 26) durch eine konische Kontaktfläche 54 des dritten Werkzeugs 52 zu einem konischen Abschnitt (Figur 1, Schenkel 26') umgeformt.

Anhand der Figuren 2 und 3 wird deutlich, dass die Befestigung des Dichtungsbalgs 16 am Kugelzapfen 14 und am Gelenkgehäuse 12 fertigungstechnisch sehr einfach in einem einzigen Arbeitsgang der Montagemaschine 38 durchführbar ist. Ausgehend von Figur 2 wird hierzu der dargestellte Teil der Montagemaschine 38 bzw. werden einzelne Werkzeuge 48, 50, 52 axial in Richtung zum Gelenkgehäuse 12 bewegt, bis schließlich der Endmontagezustand gemäß Figur 3 erreicht ist. Anschließend kann die Montagemaschine 38 wieder zurück in ihren Ausgangszustand gemäß Figur 2 bewegt und ein neues Kugelgelenk 10 mit zu montierendem Dichtungsbalg 16 eingelegt werden.

Bei der plastischen Umformung des Halterings 24 mittels des konischen Werkzeugs 52 im zweiten Verfahrensschritt bleibt der Haltering 24 in einer Verfahrensvariante vom Gelenkgehäuse 12 beabstandet und stützt sich axial und radial ausschließlich am Dichtungsbalg 16 und über den Dichtungsbalg 16 lediglich indirekt am Gelenkgehäuse 12 ab. Entscheidend sind in dieser Verfahrensvariante die Materialeigenschaften des Dichtungsbalgs 16 sowie die Dicke des Balgmaterials zwischen dem Haltering 24 und der Stirnfläche 34 des Gelenkgehäuses 12. Abhängig von diesen Parametern lässt sich die kraftgesteuerte Beaufschlagung des Halterings 24 durch das konische Werkzeug 52 anschließend so einstellen, dass der Haltering 24 zwar in gewünschter Weise plastisch verformt wird, nicht jedoch in Anlage mit dem Gelenkgehäuse 12 kommt. Das zwischen dem Haltering 24 und der Stirnfläche 34 befindliche Balgmaterial wird dabei komprimiert, bringt aber letztlich eine axiale Widerstandskraft auf, welche größer ist als die zur Verformung des Halterings 24 notwendige Axialkraft des dritten Werkzeugs 52.

In einer alternativen Verfahrensvariante wird die Stirnfläche 34 beim Umformen des Halterings 24 kurzzeitig als direktes axiales Widerlager für den Haltering 24 genutzt. Der Haltering 24 stützt sich dann bei seiner plastischen Umformung im zweiten Verfahrensschritt unter elastischer Kompression des Dichtungsbalgs 16 sowohl am Dichtungsbalg 16 als auch an der Stirnfläche 34 des Gelenkgehäuses 12 ab, wobei sich der Dichtungsbalg 16 jedoch nach dem Entfernen der Werkzeuge 48, 50, 52 wieder aufweitet und den Haltering 24 axial von der Stirnfläche 34 weg bewegt.

In jedem Fall ist der Haltering 24 nach der Montage des Dichtungsbalgs 16 vom Gelenkgehäuse 12 beabstandet, sodass in diesem Befestigungsbereich nur eine geringe Korrosionsgefährdung gegeben ist.

## Patentansprüche

1. Kugelgelenk mit
einem Gelenkgehäuse (12),
einem Kugelzapfen (14), der im Gelenkgehäuse (12) schwenkbar aufgenommen ist, und
einem Dichtungsbalg (16), der bezogen auf eine Gelenkachse (A) ein am Kugelzapfen (14) anliegendes erstes axiales Balgende (18) und ein am Gelenkgehäuse (12) befestigtes zweites axiales Balgende (20) aufweist, wobei
das Gelenkgehäuse (12) zur Befestigung des Dichtungsbalgs (16) einen Balgsitz (22) aufweist, der sowohl einen radialen Anschlag als auch einen axialen Anschlag für das zweite axiale Balgende (20) bildet, und wobei
ein vom Gelenkgehäuse (12) beabstandeter, geschlossener Haltering (24) vorgesehen ist, der den Dichtungsbalg (16) radial einwärts gegen den Balgsitz (22) beaufschlagt,
**dadurch gekennzeichnet, dass** der Haltering (24) ein plastisch umgeformter Blechring ist und
der Balgsitz (22) eine um den Kugelzapfen (14) umlaufende Gehäusestufe (32) ist, die eine den axialen Anschlag bildende Stirnfläche (34) und eine den radialen Anschlag bildende Seitenfläche (36) umfasst, wobei die Stirnfläche (34) und die Seitenfläche (36) einen Winkel α < 90° einschließen.

2. Kugelgelenk nach Anspruch 1, **dadurch gekennzeichnet, dass** der Haltering (24) ein das zweite Balgende (20) umschließender, separater Ring ist.

3. Kugelgelenk nach einem der vorhergehenden Ansprüche, **dadurch gekennzeichnet, dass** der Haltering (24) in axialer Richtung gesehen vom zweiten Balgende (20) zum ersten Balgende (18) hin einen sich verringernden Durchmesser aufweist.

4. Kugelgelenk nach Anspruch 3, **dadurch gekennzeichnet, dass** der Haltering (24) an seinem verjüngten Ringende (30) nach außen umgebogen ist.

5. Kugelgelenk nach Anspruch 3 oder 4, **dadurch gekennzeichnet, dass** der Haltering (24) an seinem verjüngten Ringende (30) um etwa 180° umgebogen ist.

6. Kugelgelenk nach einem der vorhergehenden Ansprüche, **dadurch gekennzeichnet, dass** sich die Stirnfläche (34) im Wesentlichen senkrecht zur Gelenkachse (A) erstreckt.

7. Kugelgelenk nach einem der vorhergehenden Ansprüche, **dadurch gekennzeichnet, dass** der Haltering (24) vollständig von der Stirnfläche (34) und/oder der Seitenfläche (36) des Balgsitzes (22) durch dazwischen befindliches Balgmaterial des Dichtungsbalgs (16) beabstandet ist.

8. Verfahren zum Befestigen eines Dichtungsbalgs (16) an einem Kugelgelenk (10), wobei das Kugelgelenk (10) einen Dichtungsbalg (16), ein Gelenkgehäuse (12), einen im Gelenkgehäuse (12) schwenkbar aufgenommenen Kugelzapfen (14) mit einer Zapfen-Längsachse (A) sowie einen Haltering (24) zur Befestigung des Dichtungsbalgs (16) umfasst, mit folgenden Schritten:
a) Axiale Positionierung des Halterings (24) und des Dichtungsbalgs (16) bezüglich der Zapfen-Längsachse (A), so dass der Haltering (24) den Dichtungsbalg (16) und der Dichtungsbalg (16) einen Balgsitz (22) des Gelenkgehäuses (12) umschließen;
**dadurch gekennzeichnet, dass**
b) eine Kraftgesteuerte Beaufschlagung des Halterings (24) gegen einen axialen Anschlag und einen radialen Anschlag, die beide durch die Stirnflächen (34,36) des Balgsitzes (22) gebildet werden, erfolgt, wobei der Haltering (24) plastisch verformt wird;
und wodei sich der Haltering (24) im Wesentlichen am Dichtungsbalg (16) abstützt und ein konusförmiges Werkzeug (52) am Haltering (24) angreift, den Haltering (24) axial sowie radial nach innen beaufschlagt und plastisch so umformt, dass sich ein Durchmesser des Halterings (24) zumindest abschnittsweise verringert.

9. Verfahren nach Anspruch 8, **dadurch gekennzeichnet, dass** das Kugelgelenk (10) einen Befestigungsring (44) umfasst, der an einem ersten axialen Balgende (18) vormontiert ist und im Schritt a) das erste axiale Balgende (18) an einem Balgsitz (46) des Kugelzapfens (14) fixiert.

10. Verfahren nach einem der Ansprüche 8 bis 9, **dadurch gekennzeichnet, dass** in einem Schritt a1) ein Werkzeug (48) an einem ersten axialen Balgende (18) angreift und den gesamten Dichtungsbalg (16) mit Befestigungsring (44) und Haltering (24) axial positioniert, bis der Befestigungsring (44) seine Befestigungsposition am Balgsitz (46) des Kugelzapfens (14) erreicht hat und in einem Schritt a2) ein weiteres Werkzeug (50) am Haltering (24) angreift, um den Haltering (24) und ein zweites axiales Balgende (20) bezüglich der Zapfen-Längsachse (A) axial zu positionieren, so dass das zweite axiale Balgende (20) in Kontakt mit dem Balgsitz (22) gelangt.

11. Verfahren nach einem der Ansprüche 8 bis 10, **dadurch gekennzeichnet, dass** ein ursprünglich zylindrischer Abschnitt des Halterings (24) im Schritt b) derart umgeformt wird, dass er in Richtung der Zapfen-Längsachse (A) einen verringerten Durchmesser aufweist.

12. Verfahren nach einem der Ansprüche 8 bis 11, **dadurch gekennzeichnet, dass** der Haltering (24) bei seiner plastischen Umformung im Schritt b) vom Gelenkgehäuse (12) beabstandet bleibt und sich über den Balg (16) axial und radial nur indirekt am Gelenkgehäuse (12) abstützt.

13. Verfahren nach einem der Ansprüche 8 bis 11, **dadurch gekennzeichnet, dass** sich der Haltering (24) bei seiner plastischen Umformung im Schritt b) unter elastischer Kompression des Balgs (16) sowohl am Balg (16) als auch an einer Stirnfläche (34) des Gelenkgehäuses (12) abstützt, wobei sich der Balg (16) nach dem Schritt b) wieder aufweitet und den Haltering (24) axial von der Stirnfläche (34) weg bewegt.

## Claims

1. A ball joint comprising
a joint housing (12),
a ball stud (14) which is pivotally received in the joint housing (12), and
a sealing bellows (16) which, with respect to a joint axis (A), has a first axial end (18) of the bellows resting against the ball stud (14) and a second axial end (20) of the bellows fastened to the joint housing (12),
the joint housing (12) including a bellows seat (22) for fastening the sealing bellows (16), the bellows seat forming both a radial stop and an axial stop for the second axial end (20) of the bellows, and
a closed retaining ring (24) being provided which is spaced from the joint housing (12) and urges the sealing bellows (16) radially inward against the bellows seat (22),
**characterized in that** the retaining ring (24) is a plastically reshaped sheet metal ring, and
the bellows seat (22) is a housing shoulder (32) surrounding the ball stud (14) and comprising an end face (34) defining the axial stop and a side face (36) defining the radial stop, the end face (34) and the side face (36) including an angle α < 90°.

2. The ball joint according to claim 1, **characterized in that** the retaining ring (24) is a separate ring enclosing the second end (20) of the bellows.

3. The ball joint according to either of the preceding claims, **characterized in that** the retaining ring (24), as seen in the axial direction, has a diameter which decreases from the second end (20) of the bellows towards the first end (18) of the bellows.

4. The ball joint according to claim 3, **characterized in that** the retaining ring (24) is bent over outwards at its tapered ring end (30).

5. The ball joint according to claim 3 or 4, **characterized in that** the retaining ring (24) is bent over by about 180° at its tapered ring end (30).

6. The ball joint according to any of the preceding claims, **characterized in that** the end face (34) extends substantially perpendicularly to the joint axis (A).

7. The ball joint according to any of the preceding claims, **characterized in that** the retaining ring (24) is completely spaced from the end face (34) and/or the side face (36) of the bellows seat (22) by intermediate bellows material of the sealing bellows (16).

8. A method of fastening a sealing bellows (16) to a ball joint (10), the ball joint (10) comprising a sealing bellows (16), a joint housing (12), a ball stud (14) which is pivotally received in the joint housing (12) and has a longitudinal axis (A) of the stud, and a retaining ring (24) for fastening the sealing bellows (16), comprising the following steps:
a) axially positioning the retaining ring (24) and the sealing bellows (16) with respect to the longitudinal axis (A) of the stud so that the retaining ring (24) encloses the sealing bellows (16) and the sealing bellows (16) encloses a bellows seat (22) of the joint housing (12);
**characterized in that**
b) the retaining ring (24) is urged in a force-controlled manner against an axial stop and a radial stop, both of which are defined by the end faces (34, 36) of the bellows seat (22), the retaining ring (24) being plastically deformed;
and the retaining ring (24) being essentially supported by the sealing bellows (16), and a conical tool (52) engaging the retaining ring (24), acting upon the retaining ring (24) axially as well as radially inwards and plastically reshaping it in such a manner that a diameter of the retaining ring (24) decreases at least in sections.

9. The method according to claim 8, **characterized in that** the ball joint (10) comprises a fastening ring (44) which is pre-mounted to a first axial end (18) of the bellows and in step a) fixes the first axial end (18) of the bellows to a bellows seat (46) of the ball stud (14).

10. The method according to any of claims 8 to 9, **characterized in that** in a step a1) a tool (48) engages a first axial end (18) of the bellows to axially position the entire sealing bellows (16) along with the fastening ring (44) and the retaining ring (24) until the fastening ring (44) has reached its fastening position on the bellows seat (46) of the ball stud (14), and in a step a2) a further tool (50) engages the retaining ring (24) in order to axially position the retaining ring (24) and a second axial end (20) of the bellows with respect to the longitudinal axis (A) of the stud so that the second axial end (20) of the bellows moves into contact with the bellows seat (22).

11. The method according to any of claims 8 to 10, **characterized in that** an originally cylindrical portion of the retaining ring (24) is reshaped in step b) such that it has a reduced diameter in the direction of the longitudinal axis (A) of the stud.

12. The method according to any of claims 8 to 11, **characterized in that** the retaining ring (24) during its plastic reshaping in step b) remains spaced from the joint housing (12) and is only indirectly supported by the joint housing (12) axially and radially by means of the bellows (16).

13. The method according to any of claims 8 to 11, **characterized in that** the retaining ring (24) during its plastic reshaping in step b) is supported by the bellows (16) as well as by an end face (34) of the joint housing (12) while the bellows (16) is elastically compressed, the bellows (16) expanding again after step b) and moving the retaining ring (24) axially away from the end face (34).

## Revendications

1. Articulation sphérique, comportant
un boîtier d'articulation (12),
un pivot sphérique (14) qui est reçu à pivotement dans le boîtier d'articulation (12), et
un soufflet d'étanchéité (16) qui, par rapport à un axe d'articulation (A), présente une première extrémité de soufflet axiale (18) en appui sur le pivot sphérique (14) et une deuxième extrémité de soufflet axiale (20) fixée boîtier d'articulation (12),
le boîtier d'articulation (12) présentant pour la fixation du soufflet d'étanchéité (16) un siège de soufflet (22) formant tant une butée radiale qu'une butée axiale pour la deuxième extrémité de soufflet axiale (20), et
une bague de retenue (24) fermée et espacée du boîtier d'articulation (12) étant prévue, laquelle sollicite le soufflet d'étanchéité (16) radialement vers l'intérieur contre le siège de soufflet (22),
**caractérisée en ce que** la bague de retenue (24) est une bague en tôle formée plastiquement, et
**en ce que** le siège de soufflet (22) est un épaulement de boîtier (32) entourant le pivot sphérique (14), qui comprend une face frontale (34) formant la butée axiale et une face latérale (36) formant la butée radiale, la face frontale (34) et la face latérale (36) renfermant un angle α < 90°.

2. Articulation sphérique selon la revendication 1, **caractérisée en ce que** la bague de retenue (24) est une bague séparée enfermant la deuxième extrémité de soufflet (20).

3. Articulation sphérique selon l'une des revendications précédentes, **caractérisée en ce que** vue dans le sens axial, la bague de retenue (24) présente un diamètre diminuant depuis la deuxième extrémité de soufflet (20) vers la première extrémité de soufflet (18).

4. Articulation sphérique selon la revendication 3, **caractérisée en ce que** la bague de retenue (24) est repliée vers l'extérieur à son extrémité de bague (30) réduite.

5. Articulation sphérique selon la revendication 3 ou 4, **caractérisée en ce que** la bague de retenue (24) est repliée sous un angle d'environ 180° à son extrémité de bague (30) réduite.

6. Articulation sphérique selon l'une des revendications précédentes, **caractérisée en ce que** la face frontale (34) s'étend de manière sensiblement perpendiculaire à l'axe d'articulation (A).

7. Articulation sphérique selon l'une des revendications précédentes, **caractérisée en ce que** la bague de retenue (24) en entièrement espacée de la face frontale (34) et/ou de la face latérale (36) du siège de soufflet (22) par de la matière de soufflet du soufflet d'étanchéité (16) se trouvant entre elles.

8. Procédé de fixation d'un soufflet d'étanchéité (16) sur une articulation sphérique (10), l'articulation sphérique (10) comprenant un soufflet d'étanchéité (16), un boîtier d'articulation (12), un pivot sphérique (14) reçu à pivotement dans le boîtier d'articulation (12) avec un axe longitudinal de pivot (A), et une bague de retenue (24) pour la fixation du soufflet d'étanchéité (16), le procédé comportant les étapes suivantes :
a) positionnement axial de la bague de retenue (24) et du soufflet d'étanchéité (16) par rapport à l'axe longitudinal de pivot (A) de telle sorte que la bague de retenue (24) enferme le soufflet d'étanchéité (16) et le soufflet d'étanchéité (16) enferme un siège de soufflet (22) du boîtier d'articulation (12) ;
**caractérisé en ce que**
b) une sollicitation commandée par force de la bague de retenue (24) contre une butée axiale et une butée radiale qui sont toutes les deux formées par les faces frontales (34, 36) du siège de soufflet (22) est effectuée, la bague de retenue (24) étant plastiquement déformée,
et la bague de retenue (24) prenant sensiblement appui sur le soufflet d'étanchéité (16) et un outil conique (52) s'engageant sur la bague de retenue (24), sollicitant la bague de retenue (24) axialement et radialement vers l'intérieur et la formant plastiquement de telle sorte qu'un diamètre de la bague de retenue (24) diminue au moins par tronçons.

9. Procédé selon la revendication 8, **caractérisé en ce que** l'articulation sphérique (10) comporte une bague de fixation (44) qui est pré-assemblée sur une première extrémité de soufflet axiale (18), et **en ce qu'**à l'étape a), la première extrémité de soufflet axiale (18) est fixée à un siège de soufflet (46) du pivot sphérique (14).

10. Procédé selon l'une des revendications 8 à 9, **caractérisé en ce que** dans une étape a1), un outil (48) s'engage sur une première extrémité de soufflet axiale (18) et positionne tout le soufflet d'étanchéité (16) axialement ensemble avec la bague de fixation (44) et de la bague de retenue (24) jusqu'à ce que la bague de fixation (44) atteigne sa position de fixation sur le siège de soufflet (46) du pivot sphérique (14), et **en ce que** dans une étape a2), un autre outil (50) s'engage sur la bague de retenue (24) pour positionner la bague de retenue (24) et une deuxième extrémité de soufflet axiale (20) axialement par rapport à l'axe longitudinal de pivot (A) de telle sorte que la deuxième extrémité de soufflet axiale (20) parvient en contact avec le siège de soufflet (22).

11. Procédé selon l'une des revendications 8 à 10, **caractérisé en ce qu'**un tronçon initialement cylindrique de la bague de retenue (24) est formé à l'étape b) de manière à présenter un diamètre réduit en direction de l'axe longitudinal de pivot (A).

12. Procédé selon l'une des revendications 8 à 11, **caractérisé en ce que** la bague de retenue (24) reste en éloignement du boîtier d'articulation (12) lors de son formage plastique à l'étape b) et ne prend qu'indirectement axialement et radialement appui sur le boîtier d'articulation (12) par l'intermédiaire du soufflet (16).

13. Procédé selon l'une des revendications 8 à 11, **caractérisé en ce que** lors de son formage plastique à l'étape b), la bague de retenue (24) prend appui tant sur le soufflet (16) que sur une face frontale (34) du boîtier d'articulation (12) par compression élastique du soufflet (16), le soufflet (16) s'évasant de nouveau après l'étape b) et déplaçant la bague de retenue (24) axialement en éloignement de la face frontale (34).
